# EUROPÄISCHE PATENTSCHRIFT

(11) **EP 0 832 809 B1**
(45) Veröffentlichungstag und Bekanntmachung des Hinweises auf die Patenterteilung: **06.03.2002**
(21) Anmeldenummer: 96115418.4
(22) Anmeldetag: 26.09.1996
(51) Int. Cl.: B62D 5/06, F04B 11/00

(54) **Verfahren zur Entlüftung eines hydraulischen Servolenksystems**
Method of bleeding a hydraulic power steering system
Procédé pour purger un système hydraulique de direction assistée

(43) Veröffentlichungstag der Anmeldung: 01.04.1998
(73) Patentinhaber: TRW Fahrwerksysteme GmbH & Co. KG, 40547 Düsseldorf (DE)
(72) Erfinder: Waldhelm, Michael, 40885 Ratingen (DE); Wehage, Oliver, 52066 Aachen (DE)
(74) Vertreter: Stenger, Watzke & Ring Patentanwälte

(56) Entgegenhaltungen:
- WO-A-97/47510
- DE-A- 4 231 785
- GB-A- 2 130 156

## Beschreibung

Die vorliegende Erfindung betrifft ein Verfahren zur Entlüftung von hydraulischen Servolenksystemen mit Ölentspannungsvolumina.

Im Stand der Technik sind Servo-Lenksysteme der gattungsgemäßen Art bekannt, bei welchen von einer Servopumpe ein Druckmedium, meist Hydrauliköl, über ein Servolenkventil in die Kammern eines hydraulischen Lenkgetriebes geführt wird. Einerseits ist es bekannt, daß in Hydrauliksystemen sogenannte Luftansammlungen auftreten, welche zu ungewünschten und zum Teil unangenehmen Steuerergebnissen führen können. Andererseits ist es bekannt, daß in Hydrauliksystemen sogenannte Ölentspannungsvolumina gebildet werden, beispielsweise wenn Resonatoren eingesetzt werden. Die Luft kann dabei auf unterschiedliche Weise entstehen, beispielsweise durch Leckage, durch Ausscheiden aus dem Druckmedium und dergleichen. Insbesondere wenn die Ölentspannungsvolumina, beispielsweise der Resonator, eine Kuppel aufweisen, in welcher sich Luft ansammeln kann, weil die Kuppel in Einbaulage nach oben weist, wird sich in der Kuppel mit der Zeit entsprechend viel Luft ansammeln und zu starken Störungen infolge Verschäumung führen und einer daraus folgenden Verschleißerhöhung der Pumpe.

Es besteht somit ein Bedarf daran, Maßnahmen zur Reduzierung der eingeschlossenen Luftmengen zu ergreifen.

Aus der zum Stand der Technik gemäß Artikel 54(3) EPÜ gehörenden WO 97/47510 (Anmeldedatum: 14.06.96; Veröffentlichungsdatum: 18.12.97) sind ein Verfahren und ein Lenksystem bekannt, wobei ein in Einbaulage oberer Volumenbereich eines Ölentspannungsvolumens mit einem Tankvolumen verbunden wird. Bei dieser vorbekannten Verfahrensweise gewährleistet beispielsweise ein Entlüftungsventil, welches bei geringen Drücken, zum Beispiel P = 2 bar, geöffnet ist, einen schwachen Leckagestrom in ein offenes System, welches durch ein Tankvolumen realisiert ist. Bei darüber hinausliegenden Drücken ist das Ventil geschlossen und gewährleistet damit den normalen Betrieb von Pumpe und Resonator.

Ein Nachteil der vorbekannten Vorgehensweise besteht darin, daß das Entlüftungsventil lenkungsabhängig sehr häufig geschaltet wird, was einen entsprechenden Verschleiß bedeutet. Im vorbekannten Verfahren ist das Entlüftungsventil während eines Betriebszustandes des Systems wirksam. Somit müssen die Schaltzeitpunkte möglichst genau realisierbar sein, weshalb das vorbekannte Ventil hohen Toleranzanforderungen genügen muß und damit nur mit hohem wirtschaftlichen Aufwand herstellbar ist. Dieser durch das Ventil zusätzliche Schaltpunkt kann sich negativ auf die Empfindung einer Bedienperson auswirken. Schließlich ist gemäß dem vorbekannten Verfahren die Entlüftung abhängig von sogenannten Druckpulsationen. Um den Schaltpunkt herum können sich Druckpulsationen negativ auswirken, indem das Ventil ständig öffnet bzw. schließt.

Davon ausgehend liegt der vorliegenden Erfindung die **Aufgabe** zugrunde, ein Verfahren zur Reduzierung von Lufteinschlüssen anzugeben, welche unabhängig von Druckpulsationen ein übermäßig häufiges Schalten eines Ventils vermeidet. Darüber hinaus soll der mit Erfindung ein hydraulisches Servolenksystem angegeben werden, welches eine Entlüftung ermöglicht, jedoch mit geringem wirtschaftlichen Aufwand bei langer Standzeit wirksam realisiert werden kann.

Zur technischen **Lösung** dieser Aufgabe wird mit der Erfindung ein Verfahren zur Entlüftung von hydraulischen Servolenksystemen mit Ölentspannungsvolumina angegeben, wobei zwischen einem in Einbaulage oberen Volumenbereich und einem Tankvolumen nur während eines abgeschalteten Zustandes des Systems eine Verbindung gebildet wird.

Bei dieser erfindungsgemäßen Lösung besteht nunmehr die Möglichkeit, die Luft, die sich innerhalb der Kuppel gesammelt hat, in ein offenes System abzuführen, während das System abgeschaltet ist. Der Zustand des abgeschalteten Systems liegt beispielsweise vor, wenn ein Fahrzeug abgeschaltet wird. In diesem Fall kommt ein möglicher Elektromotor, der die Hydraulikpumpe antreibt, zum Stillstand. Dieser abgeschaltete Zustand ist der Betriebszustand, in dem die erfindungsgemäße Entlüftung wirksam wird. Das offene System wird dabei durch ein Tankvolumen realisiert. Andere Realisierungen sind denkbar und liegen im Rahmen der Erfindung. Dabei ist vorgesehen, daß die Verbindung der beiden Volumina in vorteilhafter Weise von zusätzlichen Betriebsparametern abhängt. Ein geeigneter zusätzlicher Betriebsparameter ist dabei der Hydraulikdruck.

Somit wird also bei einem Abschalten des Systems eine Verbindung erzeugt, so daß die in einem Entspannungsvolumen gesammelte Luft in ein offenes System abgeführt werden kann. Hierzu wird gemäß einem vorteilhaften Vorschlag der Erfindung eine Verbindungsleitung verwendet. In besonders vorteilhafter Weise wird die Verbindungsleitung durch ein Ventil realisiert oder weist ein solches auf.

Mit der Erfindung wird ein einfaches und mit geringem wirtschaftlichen Aufwand zu realisierendes Verfahren bereitgestellt, mit welchem Lufteinschlüsse weitestgehend vermieden werden können.

Wird bei einem hydraulischen Servolenksystem das erfindungsgemäße Verfahren angewandt, ergibt sich ein neuartiges Servolenksystem mit einem Ölentspannungsvolumen, welches mit seinem in Einbaulage oberen Bereich eine im abgeschalteten Zustand des Systems betätigbare Verbindung zu einem offenen System, vorzugsweise einem Tankvolumen aufweist.

Mit besonderen Vorteil läßt sich die Erfindung bei einem hydraulischen Servolenksystem anwenden, in welches ein Resonator integriert ist.

Besondere Vorteile ergeben sich bei Lenksystemen, bei welchen direkt an der Hydraulikpumpe ein Resonator angeordnet ist. Der Resonator ist ein Volumenelement, welches eine Vielzahl von Kammern auf weist, wobei sich die Druckpulsation des Hydrauliköls im Resonator vermindert. Dabei ist es bekannt, daß direkt in einem oberen Bereich der Hydraulikpumpe der Resonator angeordnet ist. Ein Tank, in der Regel ein Kunststoff-Teil, umgibt dabei sowohl einen Teil der Pumpe als auch den Resonator.

In besonders vorteilhafter Weise ist in dem oberen Bereich des Resonator bzw. eines Entspannungsvolumens ein Ventil angeordnet. Dieses Ventil öffnet gemäß einem vorteilhaften Vorschlag der Erfindung, wenn das System abgeschaltet wird. Zur Erkennung kann ein Druckparameter verwendet werden.

Dieses öffnende/schließende Ventil ragt gemäß einem vorteilhaften Vorschlag der Erfindung direkt in den Tank. Sammelt sich somit innerhalb des Resonators mit der Zeit Luft, so wird diese in Abhängigkeit vom Hydraulikdruck regelmäßig in ein offenes System, das heißt den Tank abgeführt.

Gemäß einem besonders vorteilhaften Vorschlag der Erfindung kann dabei vorgesehen sein, daß das zum Auslassen angesammelter Luft vorgesehene neue und erfindungsgemäße Ventil ein bisher an einer Hydraulikpumpe vorgesehenes Ventil mit ursprünglich anderer Funktion ersetzt.

Die Luft kann sich in einem Hydrauliksystem auf unterschiedliche Arten sammeln. Zunächst kann dies beim Befüllen einer Pumpe oder beim Nachfüllen des Systems während des Betriebs erfolgen. Auch ist es bekannt, daß beispielsweise durch Kavitation, Auslösen durch chemische Zersetzung, Leckage und dergleichen Luft in einem Hydrauliksystem entstehen kann. Die Luft wird durch den regulären Ölvolumenstrom nicht aus dem System gefördert. Sie sammelt sich in oberen Volumenbereichen an, beispielsweise in einem Resonatordeckel. Dies besonders dann, wenn der Resonatordeckel kuppelartig ausgestaltet ist. Die im System verbleibende Luft verschäumt das geförderte Öl. Dies verschlechtert das Geräuschverhalten und kann zum Abreißen des Schmierfilms in der Pumpe führen und somit die Lebensdauer verringern.

Bei der erfindungsgemäßen Verfahrensweise gewährleistet beispielsweise ein Entlüftungsventil, welches im abgeschaltetem Zustand des Systems öffnet, eine Entlüftung und einen sehr schwachen Leckagestrom zurück in ein offenes System, beispielsweise einen Tank.

Hieraus ergeben sich eine Reihe von Vorteilen. Das verwendete Ventil schaltet praktisch nur beim Abschalten des Systems, indem es öffnet, und nochmals beim Anschalten des Systems, indem es schließt. Somit kommt es nicht zu einem häufigen Schalten. Darüber hinaus ist das Schalten des Ventils vollständig unabhängig von im Hydraulikleitungssystem auftretenden Druckpulsationen. Es kommt auch nicht während des Betriebes zu zusätzlichen Schaltpunkten, die von Bedienpersonen negativ empfunden werden kann. Darüber hinaus sind die Anforderungen an die Schaltgenauigkeit des Ventils geringer, so daß auch geringere Toleranzen zu einer günstigen wirtschaftlichen Umsetzung führen.

Weitere Vorteile und Merkmale der Erfindung ergeben sich aus der folgenden Beschreibung anhand der Figuren. Dabei zeigen:
- Fig. 1: eine schematische Darstellung eines hydraulischen Steuerkreises gemäß einem Ausführungsbeispiel der Erfindung und
- Fig. 2: einen Schnittdarstellung eines Ausführungsbeispiels für ein Ventil.

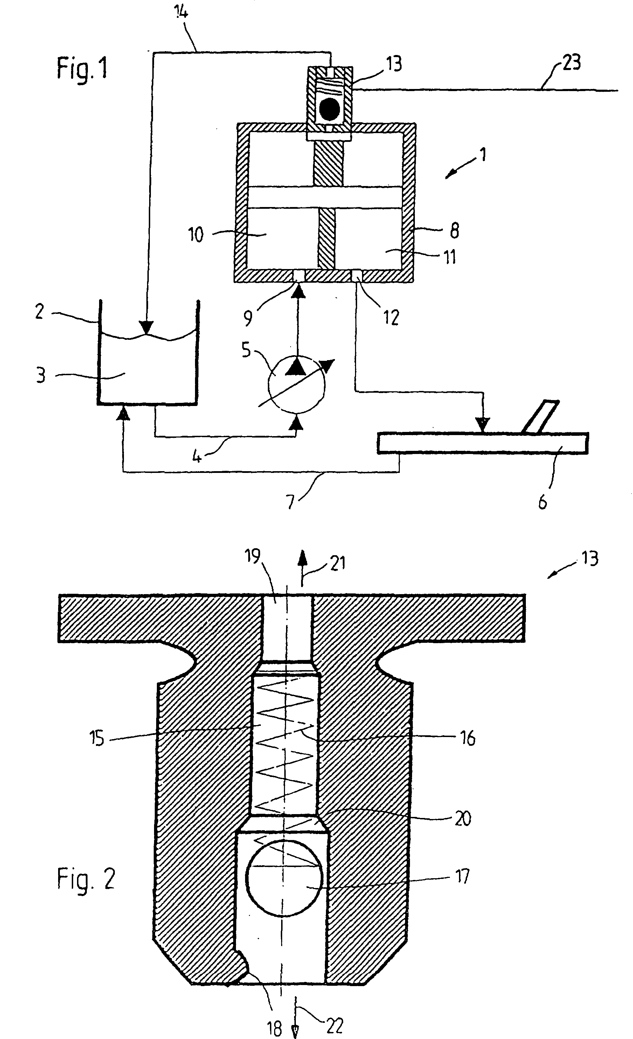

In Figur 1 ist ein Hydrauliksystem 1 gezeigt, bei welchen in einem Tank 2 Hydrauliköl 3 aufgenommen ist. Über eine Leitung 4 wird das Öl 3 einer Pumpe 5 zugeführt, wobei die Ölmenge über ein nicht gezeigtes Ventil einem Lenkgetriebe 6 zugeführt wird. Über eine Leitung 7 gelangt das Öl schließlich wieder zurück in den Tank 2.

Zwischen der Pumpe 5 und dem Lenkgetriebe 6 ist im gezeigten Ausführungsbeispiel ein Resonator 8 angeordnet. In dem Resonator 8 wird das Öl über die Bohrung 9 zugeführt. In dem Resonator 8 sind Kammern 10, 11 ausgebildet, so daß das Öl über die Bohrung 12 den Resonator wieder verläßt. Der Resonator 8 dient dabei der Reduzierung von Druckpulsationen.

Während des Befüllens bzw. nach dem Füllen einer Pumpe mit Resonator, gegebenenfalls auch während des Betriebs infolge von Kavitation, Auslösen von Luft durch chemische Zersetzung, Leckage oder dergleichen, reichert sich in dem Resonatordeckel Luft an. Dies wird begünstigt dadurch, daß der Resonator einen kuppelartigen Deckel aufweist. Die gesammelte Luft wird durch den regulären Ölvolumenstrom nicht vollständig aus dem Resonator gefördert. Die im System verbleibende Luft verschäumt das geforderte Öl. Dies verschlechtert das Geräuschverhalten und kann zum Abreißen des Schmierfilms in der Pumpe führen.

Durch das in der Kuppel des Resonators 8 angeordnete Ventil 13 kann in Abhängigkeit von vorgegebenen Parameter angesammelte Luft über die Leitung 14 in den Tank 2 zurückgeführt werden. Wird das Gesamtsystem abgeschaltet, kommt der Hydraulikpumpenantrieb zum Stillstand, der Hydraulikdruck fällt und das Ventil öffnet. Der Schaltzustand kann beispielsweise über eine Steuerleitung 23 ausgeführt werden, indem beispielsweise auf das Ventil einwirkende elektromagnetische Schalter verwendet werden. Alternativ kann auch auf derartige elektrische Zusatzelemente verzichtet werden, wenn ein herkömmliches Ventil mit einer besonders schwach ausgelegten Feder ausgestattet ist, die bei einem vollständigen Absinken des Drucks auf Minimalbereich, beispielsweise unter 0,5 bar, ein Öffnen des Ventils zuläßt, andererseits bereits bei Aufbau eines geringsten Druckes wieder ein Schließen des Ventils ermöglicht.

Bei modernen und an sich bekannten Pumpen ist der Resonator direkt an der Pumpe befestigt. In diesem Fall führt eine Bohrung von der Pumpe direkt in den Resonator. Das Hydrauliköl durchläuft dann verschiedene Kammern und gelangt über eine weitere Bohrung in den weiteren Kreislauf. Im gezeigten Ausführungsbeispiel ist die Zulaufbohrung in den Resonator 8 die Bohrung 9. Das Hydrauliköl durchläuft einige Kammern 10, 11 und verläßt den Resonator über die Bohrung 12.

In Figur 2 ist ein Ausführungsbeispiel für ein Ventil 13 gezeigt. Das Ventil 13 hat eine Durchgangsbohrung, in welcher in einem Federraum 15 eine Feder 16 angeordnet ist. Die Feder 16 ist im gezeigten Ausführungsbeispiel eine Schraubenfeder, welche eine Kugel 17 gegen einen Rastnocken 18 drückt. Somit ist das Ventil 13 zum Nachsaugen geöffnet. Ab einem vorgegebenen Druck wird die Kugel 17 gegen die Kraft der Feder 16 vom Nocken 18 abgedrückt und gegen den Dichtsitz 20 geschlossen. Das Ventil 13 ist von an sich bekannter Bauart. Die Luft, welche mit Öl verschäumt sein kann oder Öl aufweisen kann, verläßt den Resonator über das Ventil 13 und den Anschluß 19 in ein offenes System, beispielsweise den Tank 2.

### Bezugszeichenliste

- 1: Hydrauliksystem
- 2: Tank
- 3: Hydrauliköl
- 4: Leitung
- 5: Pumpe
- 6: Lenkgetriebe
- 7: Leitung
- 8: Resonator
- 9: Bohrung
- 10: Kammer
- 11: Kammer
- 12: Bohrung
- 13: Ventil
- 14: Leitung
- 15: Federraum
- 16: Feder
- 17: Kugel
- 18: Nocken
- 19: Anschluß
- 20: Dichtsitz
- 21: Leckagestrom
- 22: Nachsaugstrom
- 23: Steuerleitung

## Patentansprüche

1. Verfahren zur Reduktion von Lufteinschlüssen bei hydraulischen Servolenksystemen mit Ölentspannungsvolumina, wobei der in Einbaulage obere Volumenbereich mit einem Tankvolumen verbunden wird und die Verbindung nur während eines abgeschalteten Zustandes des Systems gebildet wird.

2. Verfahren nach Anspruch 1, **dadurch gekennzeichnet, daß** die Verbindung durch öffnen einer Verbindungsleitung erfolgt.

3. Verfahren nach einem der vorhergehenden Ansprüche, **dadurch gekennzeichnet, daß** zum Herstellen der Verbindung ein Ventil verwendet wird.

4. Verfahren nach einem der vorhergehenden Ansprüche, **dadurch gekennzeichnet, daß** die Verbindung bei wenigstens einem weiteren gegebenen Betriebsparameter erfolgt.

5. Verfahren nach Anspruch 2, **dadurch gekennzeichnet, daß** als Betriebsparameter der Hydraulikdruck verwendet wird.

6. Hydraulik-Servolenksystem mit wenigstens einem Ölentspannungsvolumen, welches im in Einbaulage oberen Bereich eine Verbindung zu einem Tankvolumen aulweist, wobei
die Verbindung nur im abgeschalteten Zustand des Systems betätigbar ist.

7. Lenksystem nach Anspruch 6, **dadurch gekennzeichnet, daß** das Ölentspannungsvolumen ein Resonator ist.

8. Lenksystem nach Anspruch 7, **dadurch gekennzeichnet, daß** der Resonator an einer Hydraulikpumpe angeordnet ist.

9. Lenksystem nach einem der Ansprüche 6 bis 8, **dadurch gekennzeichnet, daß** die Verbindung durch ein Ventil hergestellt ist.

10. Lenksystem nach Anspruch 9, **dadurch gekennzeichnet, daß** das Ventil im Abschaltzustand des Systems öffnet.

11. Lenksystem nach Anspruch 9, **dadurch gekennzeichnet, daß** das Ventil direkt in den Tank ragt.

12. Lenksystem nach einem der Ansprüche 9 bis 11, **dadurch gekennzeichnet, daß** das Ventil gleichzeitig als Nachsaugventil eingesetzt ist

## Claims

1. Method of reducing air locks in hydraulic power steering systems with oil relief volumes, wherein the, in installed position, upper volume region is connected to a tank volume and the connection is formed only during a cut-off state of the system.

2. Method according to claim 1, **characterized in that** the connection is effected through opening of a connecting line.

3. Method according to one of the preceding claims, **characterized in that** a valve is used to establish the connection.

4. Method according to one of the preceding claims, **characterized in that** the connection is effected given at least one further prevailing operating parameter.

5. Method according to claim 2, **characterized in that**, as an operating parameter, the hydraulic pressure is used.

6. Hydraulic power steering system having at least one oil relief volume, which in the, in installed position, upper region has a connection to a tank volume, wherein the connection is actuable only in the cut-off state of the system.

7. Steering system according to claim 6, **characterized in that** the oil relief volume is a resonator.

8. Steering system according to claim 7, **characterized in that** the resonator is disposed at a hydraulic pump.

9. Steering system according to one of claims 6 to 8, **characterized in that** the connection is established by a valve.

10. Steering system according to claim 9, **characterized in that** the valve opens in the cut-off state of the system.

11. Steering system according to claim 9, **characterized in that** the valve projects directly into the tank.

12. Steering system according to one of claims 9 to 11, **characterized in that** the valve is used simultaneously as a replenishing valve.6

## Revendications

1. Procédé pour réduire des inclusions d'air dans des systèmes hydrauliques de direction assistée avec des volumes de détente d'huile, la zone de volume supérieure en position de montage étant reliée à un volume de réservoir et la liaison n'étant établie que lors d'un arrêt du système.

2. Procédé selon la revendication 1, **caractérisé en ce que** la liaison est effectuée par ouverture d'une tuyauterie de liaison.

3. Procédé selon l'une quelconque des revendications précédentes, **caractérisé en ce qu'**une vanne est utilisée pour établir la liaison.

4. Procédé selon l'une quelconque des revendications précédentes, **caractérisé en ce que** la liaison est effectuée selon au moins un autre paramètre de service donné.

5. Procédé selon la revendication 2, **caractérisé en ce que** la pression hydraulique est utilisée comme paramètre de service.

6. Système hydraulique de direction assistée avec au moins un volume de détente d'huile qui présente, dans la zone supérieure en position de montage, une liaison avec un volume de réservoir, la liaison ne pouvant être commandée que lors de l'arrêt du système.

7. Système de direction selon la revendication 6, **caractérisé en ce que** le volume de détente d'huile est un résonateur.

8. Système de direction selon la revendication 7, **caractérisé en ce que** le résonateur est disposé sur une pompe hydraulique.

9. Système de direction selon l'une quelconque des revendications 6 à 8, **caractérisé en ce que** la liaison est établie par une vanne.

10. Système de direction selon la revendication 9, **caractérisé en ce que** la vanne s'ouvre lorsque le système est à l'arrêt.

11. Système de direction selon la revendication 9, **caractérisé en ce que** la vanne pénètre directement dans le réservoir.

12. Système de direction selon l'une quelconque des revendications 9 à 11, **caractérisé en ce que** la vanne est utilisée en même temps comme vanne d'aspiration finale.
